# FASCICULE DE BREVET EUROPEEN

(11) **EP 0 734 111 B1**
(45) Date de publication et mention de la délivrance du brevet: **05.07.2006**
(21) Numéro de dépôt: 96400610.0
(22) Date de dépôt: 22.03.1996
(51) Int. Cl.: H02J 7/35

(54) **Station d'énergie photovoltaique haute tension à stockage personnalisé**
Photovoltaische Hochspannungsanlage mit individuellen Speichermitteln
High voltage photovoltaic energy station using a custom storage means

(30) Priorité: 24.03.1995 FR 9503490
(43) Date de publication de la demande: 25.09.1996
(73) Titulaire: FRANCE TELECOM, 75015 Paris (FR)
(72) Inventeur: Guyonneau, Claude, 75015 Paris (FR); Aubree, Marc, 78500 Sartrouville (FR)
(74) Mandataire: Simon, Viviane

(56) Documents cités:
- DE-A- 3 319 511
- FR-A- 2 538 628
- GB-A- 2 033 680
- US-A- 4 281 278
- ELEKTROTECHNISCHE ZEITSCHRIFT, vol. 111, no. 4, Février 1990, BERLIN, pages 182-187, XP000101606 K.HEUMANN ET AL: "rechnersimulation zur optimierung regenerativer stromversorgungsanlagen"

## Description

### Domaine technique

La présente invention concerne une station d'énergie photovoltaïque haute tension à stockage personnalisé.

### Etat de la technique antérieure

Le domaine technique concerné par l'invention est celui de la fourniture d'énergie électrique en site isolé, par l'intermédiaire d'une station de type photovoltaïque.

Actuellement les stations solaires connues et en fonctionnement sur des équipements de type télécommunication ou informatique dans une gamme de puissance allant de quelques watts à plusieurs kilowatts permanents sont basées sur un stockage de type basse tension continu (24 ou 48 volts).

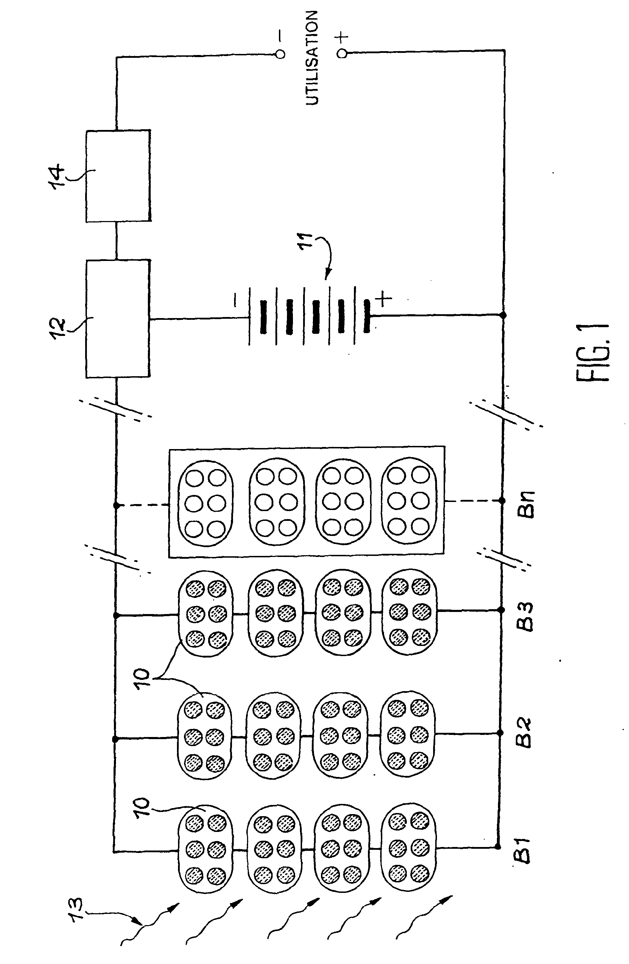

Comme représenté sur la figure 1, certaines stations solaires associent des modules solaires photovoltaïques 10 de tension unitaire 12 Volts en groupements séries/parallèles, par exemple n colonnes B1..... Bn de quatre modules, afin d'obtenir une puissance adaptée aux besoins, et une batterie 11 (24 ou 48 volts) correspondante d'une capacité adaptée à l'autonomie recherchée, en vue d'alimenter une charge (utilisation) directement en continu.

La charge de la batterie 11 est contrôlée par un régulateur de tension 12 placé entre les modules 10 et la batterie d'accumulateurs 11. L'utilisation (24 ou 48 volts continu) est branchée sur la batterie d'accumulateurs au travers d'un régulateur utilisation 14, comme représenté sur la figure 1. Sur cette figure est également illustré le rayonnement solaire 13.

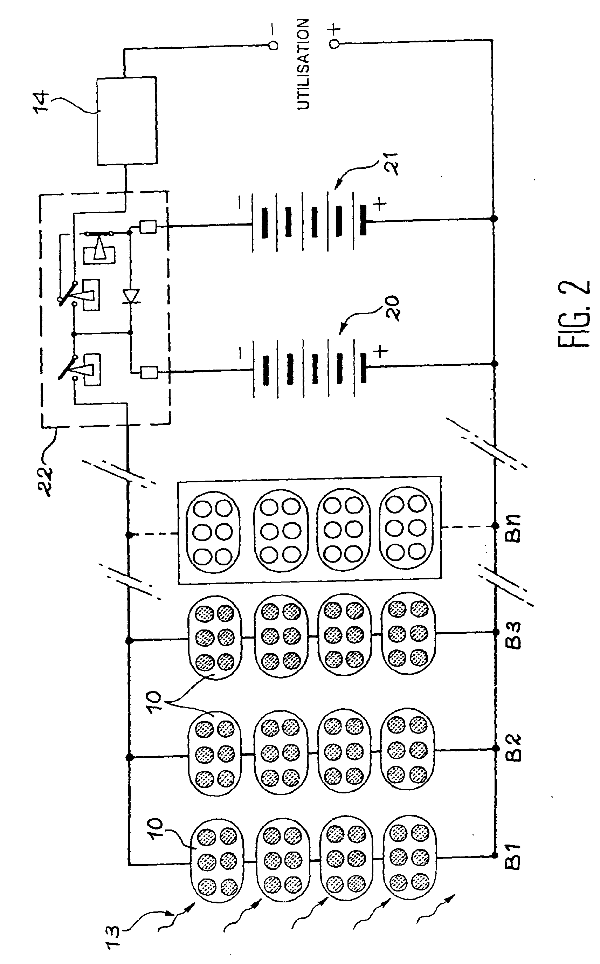

Comme représenté sur la figure 2, certaines stations sont conçues différemment. Elles consistent en un stockage de type double batterie : l'une 20 étant branchée sur l'utilisation, pendant que l'autre 21 se recharge sur les panneaux solaires 10. La permutation se fait lors de la fin de décharge de la batterie branchée sur l'utilisation. Les tensions des batteries d'accumulateurs sont identiques à celles des stations définies précédemment, l'utilisation est également alimentée en basse tension et courant continu de type (24/48 volts).

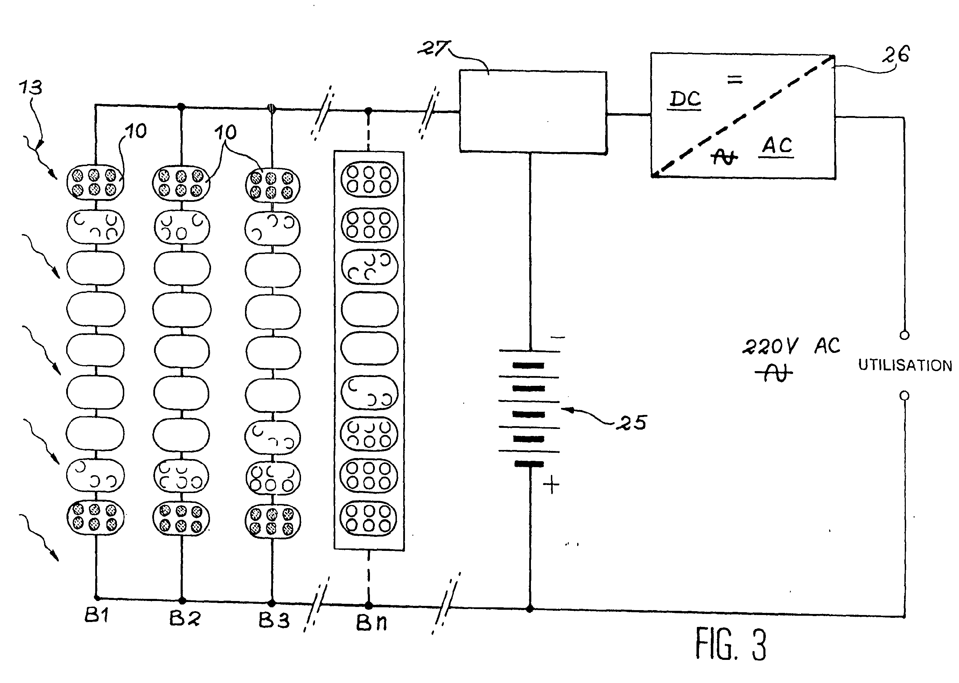

Comme représenté sur la figure 3, d'autres stations plus particulièrement destinées à alimenter une charge en courant alternatif, comprennent une batterie 25 de type haute tension (110 ou 220 volts DC) chargée par une association de modules solaires photovoltaïques 10 en association série/parallèle et un onduleur (DC/AC) 26 alimenté derrière cette batterie de stockage qui transforme le courant continu en courant alternatif à destination de l'utilisation (110/220 AC). Un régulateur 27 assure le contrôle de la charge de la batterie. Mais ce type de station n'est pas ou très peu utilisé pour les puissances concernées par l'invention.

Dans le domaine plus spécifique des télécommunications la tension de 48 volts continu (DC) était traditionnellement celle utilisée directement par les systèmes (principalement électromécaniques et semi-électroniques). C'est la raison pour laquelle le stockage et l'alimentation préférentielle demeurait le 48 volts continu.

Avec les progrès technologiques enregistrés aujourd'hui, force est de constater que le 48 volts continu ne représente plus qu'une infime partie de l'énergie consommée par les systèmes actuels. En effet, les centraux téléphoniques comme les stations de télécommunications modernes font appel aux composants intégrés dont les tensions de fonctionnement sont typiquement les suivantes : 2, 3, 5, 12, 15, 24 ou 28 volts continu, le 48 volts étant marginal (ligne d'abonné en voie de disparition au profit des radiotéléphones).

Dans les stations actuelles la source 48 volts continu qui est délivrée et acheminée vers l'utilisation doit être transformée en toutes ces différentes tensions par l'intermédiaire de convertisseurs, ces convertisseurs étant intégrés dans les systèmes eux-mêmes. Il en résulte un dégagement calorifique important au niveau même des équipements sensibles. De plus les différentes tensions délivrées en sortie ne bénéficient pas d'un stockage personnalisé adapté aux besoins sur chaque tension (en général la même intensité n'est pas demandée sur chaque tension utilisée dans un système donné).

Dans les stations à stockage 24 ou 48 volts continu, avec une autonomie sur batterie demandée pour cinq à sept jours, la capacité batterie est importante et les courants de circulation sont donc eux aussi élevés. De plus, une modularité et une recharge progressive ou prioritaire (décalée dans le temps) n'est pas possible. Afin de limiter les chutes de tension, les câbles de liaison doivent être dimensionnés pour faire face à ces courants importants aussi bien au niveau des modules solaires, que de la batterie et de l'utilisation. De plus si l'un des éléments de la batterie d'accumulateurs se coupe, il y a coupure sur l'utilisation, ce qui oblige à dupliquer la batterie pour assurer la sécurité de fonctionnement de la station.

Un autre inconvénient des stations d'énergie photovoltaïques actuelles est lié au vandalisme. En effet nombre de modules solaires photovoltaïques (12 volts/45 Wc par exemple) disparaissent des stations. Ils sont de taille modeste, facilement transportables et d'une utilisation immédiate (chargeur de batterie automobile, navigation, éclairage...). De plus il y a peu, voir aucun danger d'électrocution à craindre pour intervenir sur une station de type 48 volts DC.

De plus lorsque, pour des raisons liées à l'ensoleillement par exemple, les panneaux solaires sont éloignés du reste de la station, le transport en basse tension est le siège de chutes de tension importantes, ce qui oblige à utiliser des câbles de liaison d'une section importante de façon à limiter les pertes dues à la résistance du câble de liaison et à la distance.

En ce qui concerne les stations de type fourniture en alternatif, le stockage est fait en une seule fois au niveau de l'onduleur. Un régulateur de tension pour la charge de la batterie est nécessaire. Le rendement de l'onduleur n'est pas parfait. Celui-ci n'est généralement pas dupliqué vu son coût élevé, ce qui rend la station peu fiable et sans redondance, et qui introduit des pertes d'énergie dans le circuit. La liaison vers l'utilisation se fait en haute tension alternative. Les chutes de tensions sont limitées et la section des câbles de liaison est plus faible. Mais pour une utilisation en tensions continues multiples, indispensables aux équipements modernes actuels, il faut généralement introduire une alimentation 220 volts alternatifs (AC) qui va transformer le 220 volts AC en multisources DC. Une telle alimentation est en général intégrée dans les équipements à alimenter. Là encore, aucune personnalisation des différentes tensions n'est possible. De plus le dégagement calorifique de ces alimentations n'est pas sans inconvénient sur le bon fonctionnement de ces ensembles.

Les documents de l'art antérieur [1], [2] et [3] cités en fin de description décrivent respectivement des stations d'énergie photovoltaïques connues, un régulateur de charge de batterie d'accumulateurs pour générateur photovoltaïque, et un dispositif de commutation pour charger une batterie branchée sur un système photovoltaïque de forte puissance.

Le document de l'art antérieur [4] décrit un appareil pour contrôler l'utilisation de l'énergie électrique fournie par une source irrégulière d'énergie, par exemple un ensemble de cellules photoélectriques, qui fournit de l'énergie à une charge et à une batterie de stockage.

L'objet de l'invention est de supprimer les différents inconvénients évoqués ci-dessus, à savoir :
- un stockage sur une tension qui n'est plus ou très peu utilisée sur les systèmes modernes ;
- des chutes de tensions importantes liées au stockage basse tension ;
- des sections de câbles importantes et donc de coût élevé ;
- des pertes liées aux rendements de l'onduleur et de l'alimentation (cas d'une fourniture en alternatif) ;
- des pertes calorifiques importantes dues à la présence de convertisseurs (DC/DC ou AC/DC) au niveau des équipements à alimenter, ce qui oblige les équipementiers à prévoir des dispositifs spéciaux tels que des ventilateurs ou autres structures encombrantes au niveau des équipements ;
- un stockage commun qui ne prend pas en compte les particularités de chaque tension ;
- une redondance nécessaire des batteries d'accumulateurs en basse tension pour assurer la fiabilité de la fourniture d'énergie ;
- l'attrait des vandales pour les modules solaires, qui sont d'un maniement facile (vol) et d'une utilisation immédiate pour des applications domestiques courantes.

### Exposé de l'invention

La présente invention concerne donc une station d'énergie photovoltaïque haute tension à double stockage comprenant plusieurs modules solaires photovoltaïques qui sont des modules de tension unitaire en association série/parallèle, comprenant:
- un dispositif de stockage principal en haute tension formé d'une batterie d'accumulateurs;
- un régulateur de charge du dispositif de stockage principal ;
caractérisé en ce qu'elle comprend en outre :
- un dispositif de stockage personnalisé comprenant au moins une batterie de stockage personnalisé permettant d'affecter la puissance nécessaire à une ou plusieurs tension d'utilisation ;
- un dispositif de conversion entre le dispositif de stockage principal et le dispositif de stockage dit personnalisé ;
- une liaison en haute tension entre le dispositif de stockage principal et le dispositif de conversion ;
- un dispositif de régulation de chaque tension d'utilisation.

Dans une réalisation avantageuse les modules solaires photovoltaïques sont des modules de tension unitaire, par exemple de 55 volts. Le stockage principal est constitué de 110 éléments de 2 volts nominaux et de capacité fonction de la charge et de l'autonomie souhaitée en fonctionnement sans ensoleillement. Les différentes batteries du dispositif de stockage principal et du dispositif de stockage dit personnalisé sont soit de type stationnaires au plomb à grande réserve d'électrolyte et éventuellement avec système de brassage de l'électrolyte, soit étanches, soit au cadmium-nickel.

Avantageusement au moins une diode de passage est disposée sur chaque élément de batterie d'accumulateurs de façon à assurer une continuité de fonctionnement en cas de rupture d'un élément.

Avantageusement le dispositif de conversion comprend des convertisseurs continu/continu, disposés en parallèle ou en série, partent des 220 volts continu pour fournir les tensions nécessaires à l'utilisation.

Avantageusement les batteries du dispositif de stockage dit personnalisé sont soit du type batterie solaires au plomb stationnaire à grande réserve d'électrolyte, soit du type étanche à recombinaison de gaz, soit des batteries type cadmium/nickel. La charge et l'entretien de ces batteries sont obtenus grâce à des convertisseurs continu/continu du dispositif de conversion dont la tension de sortie est réglable de 20% à 60%,

Dans une configuration avantageuse le dispositif de conversion comprend un convertisseur équipé d'origine d'un système automatique de passage charge/entretien correspondant à un changement de tension appliqué sur les éléments de batteries d'accumulateurs. Un circuit de filtrage, régulation destiné à assurer la régulation de la tension sur l'utilisation est disposé en sortie du dispositif de conversion et du dispositif de stockage dit personnalisé. Un amplificateur différentiel amplifie la différence entre la tension de référence, obtenue à partir d'une diode zéner et la tension mesurée à la sortie de l'ensemble dispositif de conversion/dispositif de stockage dit personnalisé, la tension de référence étant amenée à zéro par un microprocesseur ou par un détecteur de présence de tension inhibant ainsi l'action du régulateur. En cas de décharge sur batteries, c'est ce dernier circuit qui régule la tension en décharge, alors que le microprocesseur en limite la durée. Le dispositif de conversion comprend des convertisseurs DC/DC qui sont tous mis en parallèle, la capacité de l'ensemble prenant en compte le courant permanent propre à l'utilisation, ainsi que le courant de recharge des batteries d'accumulateurs.

Dans une autre configuration avantageuse, le dispositif de conversion comprend des convertisseurs affectés à la seule charge des batteries du dispositif de stockage dit personnalisé. La tension de sortie des convertisseurs est réglée indépendamment de la tension de sortie des convertisseurs en direct sur l'utilisation, la redondance des convertisseurs étant calculée sur les seuls besoins de l'utilisation, le circuit de charge des batteries étant déjà considéré comme un circuit de secours. Avantageusement dans la station selon l'invention les équipements de télécommunications sont totalement séparés des équipements d'énergie une enceinte entièrement close et thermiquement isolée étant alors prévue.

L'originalité de la station selon l'invention est de fonctionner en haute tension et de proposer un système de stockage de l'énergie personnalisé à chaque type d'utilisation. Le bon rendement de l'ensemble, associé à l'absence de dégagement calorifique important, ainsi que la protection "naturelle" contre le vol des panneaux solaires (du fait du fonctionnement sous une tension inexploitable pour les besoins domestiques usuels) en fait une station tout particulièrement destinée aux sites isolés sous des climats chauds et très ensoleillés.

Une telle station permet d'optimiser le dimensionnement aussi bien de la puissance crête (modules solaires photovoltaïques) que de la capacité batterie. En effet, le stockage dit "personnalisé" permet d'affecter à chaque tension d'utilisation la puissance nécessaire (convertisseurs et batteries associées).

Une sécurité supplémentaire réside dans le système de double stockage utilisé dans cette station: une batterie dite stockage principal est commune à toutes les tensions d'utilisation, et une batterie dite de stockage personnalisé ou réparti existe pour chaque tension d'utilisation. Une autonomie cumulable et configurable (on peut aussi parler de modulaire) est affectée à chacun de ces stockages offrant ainsi à l'utilisateur des possibilités nombreuses d'adaptation aux modifications et extensions de charges.

Avantageusement également, une recharge prioritaire ou progressive peut être faite au niveau d'une ou de plusieurs batteries d'accumulateurs (adaptation du dimensionnement en fonction de la charge dite "prioritaire").

Les applications visées par cette station sont nombreuses puisqu'elles touchent tous les équipements de type électronique et électrotechnique dont les tensions de fonctionnement sont celles typiquement et principalement utilisées par les constructeurs de systèmes de télécommunications ou d'informatique.

La conception d'une telle station est révolutionnaire pour les concepteurs d'équipements de télécommunications et d'informatique pour sites isolés car elle prend en charge la totalité de la gestion de l'énergie et intervient même favorablement en facilitant la conception du système toujours délicat lié aux conditions climatiques de fonctionnement.

Ces stations s'adressent donc tout particulièrement à des concepteurs qui sont soucieux de :
- gérer au mieux l'énergie nécessaire à leur système tout en assurant une haute fiabilité ;
- gagner de la place au niveau de l'encombrement de leurs équipements ;
- économiser toute la partie alimentation de leur système, donc devenir plus compétitif ;
- augmenter la durée de vie de leurs équipements grâce aux conditions climatiques favorables ;
- simplifier au maximum le fonctionnement et la maintenance de la station d'énergie.

### Brève description des dessins

- La figure 1 illustre une première station photovoltaïque de type 48 volts de l'art antérieur ;
- la figure 2 illustre une seconde station photovoltaïque de type utilisation alternative de l'art antérieur ;
- la figure 3 illustre une troisième station photovoltaïque de type utilisation alternative de l'art antérieur;
- la figure 4 illustre une station photovoltaïque en haute tension selon l'invention ;
- les figures 5A et 5B illustrent une batterie d'accumulateur de stockage principal de la station selon l'invention illustrée à la figure 4 ;
- la figure 6 illustre l'organisation générale de la station selon l'invention ;
- la figure 7 illustre le stockage personnalisé de la station selon l'invention ;
- la figure 8 illustre une variante du stockage personnalisé représenté à la figure 7 ;
- la figure 9 illustre une variante du stockage personnalisé selon l'invention (une seule batterie en stockage personnalisé) ;
- la figure 10 illustre l'organisation pratique d'une station selon l'invention.

### Exposé détaillé de modes de réalisation

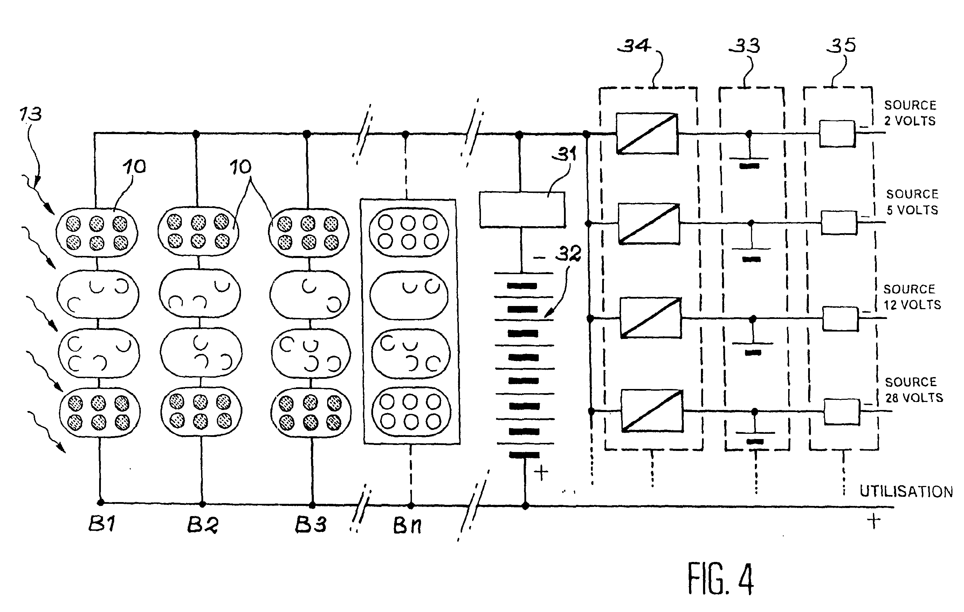

La figure 4 montre le principe général de la station d'énergie photovoltaïque haute tension à stockage personnalisé selon l'invention.

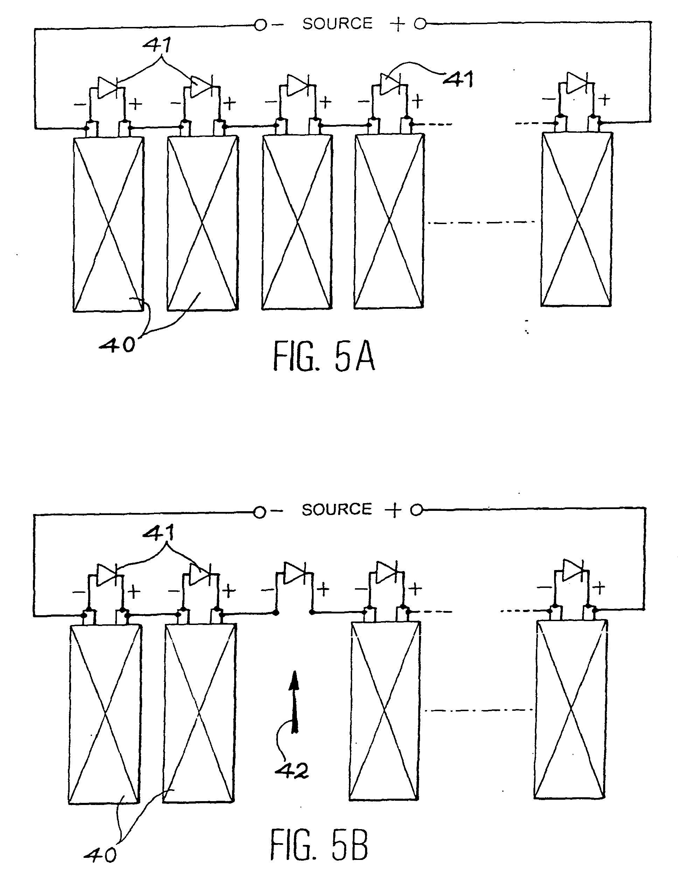

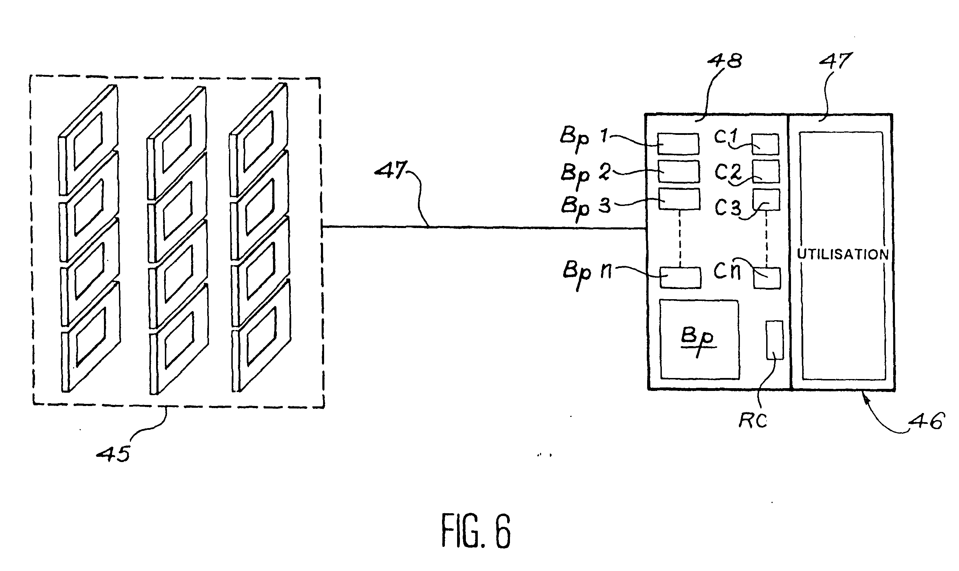

Elle comprend :
- des modules solaires photovoltaïques 10 qui sont des modules de tension unitaire, par exemple de type 55 volts, en association série/parallèle. On a ici des groupements Bi de par exemple quatre modules 10 identiques formant une branche de 4 x 55 = 220 volts continu (DC). Selon les besoins de l'utilisation (puissance totale permanente consommée) ces groupement Bi de quatre modules sont mis en parallèle. L'avantage de ces modules réside dans leur tension unitaire qui ne correspond pas aux tensions dites "utilitaires courantes" en sorte que leur vol est dénué d'intérêt pour le commun des utilisateurs potentiels. Par ailleurs, la tension globale d'une branche (220 volts continu) est également dissuasive pour un vol de jour. De plus et toujours dans le même but, la taille d'un module de type 55 volts rend la manutention de ce module et son "camouflage" beaucoup plus difficile. Avantageusement, le câblage du champ solaire est grandement simplifié puisque le nombre de modules est divisé par quatre (gain de câbles et de temps lors du montage) ;
- un régulateur 31 de charge de la batterie qui, comme pour une régulation en 48 volts, est chargé de contrôler les tensions de fin de charge et de fin de décharge d'une batterie de stockage principal 32, et d'une manière générale d'assurer la pleine charge de cette batterie et sa protection. Il donne également des alarmes en cas d'anomalie de fonctionnement de l'ensemble. Sa construction est plus simple qu'un régulateur 48 volts car la fonction de régulation sur l'utilisation n'est pas nécessaire dans ce type de station ;
- la batterie d'accumulateurs 32 dite de stockage principal qui peut être de type stationnaire à forte réserve d'électrolyte (batterie solaire) ou étanche (sans entretien) ou de type cadmium-nickel. Sa tension de fonctionnement en relation avec les modules photovoltaïques est de 220 volts nominaux. Elle est donc constituée d'éléments de 2 volts ou 1,2 volts selon le type de batterie utilisé, et de capacité fonction de la charge et de l'autonomie souhaitée en fonctionnement sans ensoleillement (en prenant en compte le stockage personnalisé défini ci-dessous). Pour une même autonomie on remarque qu'une station en 220 volts a une batterie dont la capacité est quatre fois moins importante que celle d'une batterie en 48 volts. Ceci permet d'assurer la sécurité de la fourniture d'énergie en cas de défaillance d'un élément de batterie en associant une diode 41 de passage à chaque élément, comme représenté sur les figures 5A et 5B (ce qui est difficilement envisageable en 48 volts vu les capacités comparées). Il devient donc inutile de dupliquer la batterie d'accumulateurs, la figure 5B correspondant à la rupture d'un élément de 2 volts (flèche 42) ;
- un stockage personnalisé : l'une des originalités de cette station réside dans ce dispositif de stockage personnalisé ou réparti 33 ;
- une liaison entre le dispositif de stockage principal et le dispositif de stockage personnalisé se faisant en haute tension. La chute de tension est beaucoup plus faible qu'en 48 volts, ce qui a pour conséquence d'une part de pouvoir utiliser des câbles de sections plus faibles et surtout de pouvoir augmenter la distance entre les modules solaires photovoltaïques, régulateur et batterie principale et le reste de la station. A noter que rien n'interdit par ailleurs de regrouper stockage principal et personnalisé en un site et de relier des modules photovoltaïques qui seraient seuls à distance puisque la liaison est également réalisée en haute tension, comme représenté sur la figure 6. Sur cette figure est ainsi représenté l'ensemble des modules solaires photovoltaïques ou champ solaire 45, un abri ou shelter 46 contenant des batteries personnalisées Bp1.... Bpn, une batterie principale Bp, des convertisseurs DC/DC, C1....Cn, un régulateur de charge RC et l'utilisation, et une liaison 47 ;
- une régulation d'utilisation référence 35.

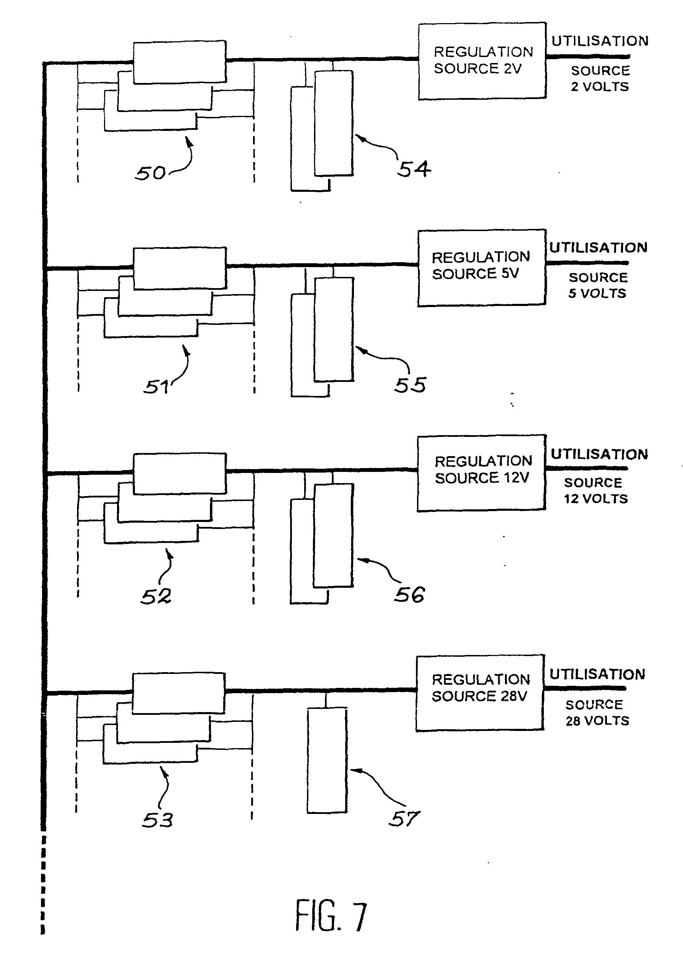

Pour la mise en oeuvre du stockage personnalisé, depuis l'arrivée 220 volts DC, on alimente en tensions multiples l'utilisation finale dont on a au préalable établi le bilan énergétique (tensions nécessaires, courants nécessaires et autonomie souhaitée, et ce source par source). On calcule alors le nombre de convertisseurs continu/continu 34 nécessaires, source par source, on les met en parallèle et on leur associe une batterie de capacité suffisante pour assurer l'autonomie recherchée, comme représenté sur la figure 7. Sur cette figure sont représentés :
- des convertisseurs DC/DC 220 / 2volts (50),
- des convertisseurs DC/DC 220 / 5 volts (51),
- des convertisseurs DC/DC 220 / 12 volts (52),
- des convertisseurs DC/DC 220 / 28 volts (53),
et
- des batteries 2 volts (54),
- des batteries 5 volts (55),
- des batteries 12 volts (56),
- une batterie 28 volts (57).

Ces convertisseurs modulaires sont situés à proximité de l'utilisation. De même les batteries d'accumulateurs sont placées dans une baie séparée ou non, également proche des équipements à alimenter.

Il est ainsi possible d'envisager des sources sans stockage (réparti) dans la mesure où une coupure de ces sources n'entraîne pas de perturbation notoire dans le fonctionnement de l'ensemble. On perçoit mieux ici l'intérêt de cette personnalisation des sources et de l'optimisation énergétique que l'on peut en attendre.

On a parlé de stockage principal en évoquant la batterie haute tension, mais rien n'interdit de reporter le maximum de stockage d'énergie au niveau des différentes sources et de ne maintenir qu'une autonomie réduite (par exemple une journée) au niveau de la batterie principale. Cette disposition permet de mieux gérer les ampères heures emmagasinés et d'optimiser les rendements et les coûts des différents constituants (convertisseurs et batterie).

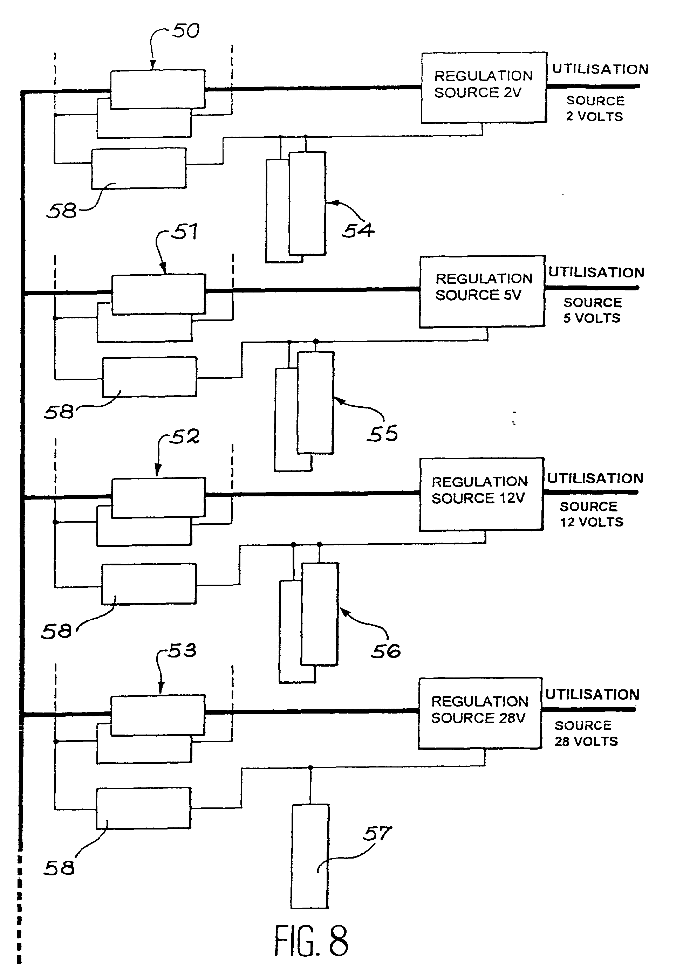

Les moyens caractéristiques de l'invention sont donc les suivants :
- des modules solaires photovoltaïques de tension nominale voisine de par exemple 55 volts (rien, si ce n'est la taille du panneau solaire, n'interdit de concevoir des modules unitaires de 110 volts), le but étant de rendre le vol des modules dissuasif tant à la fois au niveau des tensions que de la taille du panneau. Dans les dispositifs de l'art antérieur la tension de référence des modules est de 12 volts ou de 24 volts ;
- un régulateur de charge très simplifié par rapport au régulateur classique 48 volts ;
- différentes batteries soit de type stationnaires au plomb à grande réserve d'électrolyte et éventuellement avec système de brassage de l'électrolyte (pour éviter la stratification), soit étanches (sans entretien), soit de type cadmium-nickel. La particularité du système consiste à mettre des diodes de passage sur chaque élément de batterie d'accumulateur de façon à assurer une continuité de fonctionnement en cas de rupture d'un élément ;
- différents convertisseurs continu/continu (DC/DC) qui partant du 220 volts DC vont fournir les tensions nécessaires à la charge (utilisation). Ce type de convertisseur est très facile à mettre en oeuvre : à titre d'exemple, pour une tension d'entrée variant entre 180 et 370 volts, il existe des modules unitaires qui en sortie fournissent les tensions requises à ± 2 % avec un rendement de l'ordre de 85 %, et ce pour différentes puissances unitaires type 50W, 75W, 100W, 150W, 200W, 300W.... Ces convertisseurs peuvent être mis en parallèle ou en série ; ils fonctionnent pour une plage de température comprise entre -20°C et +85°C (température d'embase des convertisseurs). Cette plage de température permet de faire fonctionner ces équipements en ambiance naturelle, même sous des climats très rudes de type équatorial ou tropical. La séparation des convertisseurs de l'utilisation, comme représenté sur la figure 8, fait partie des avantages de l'invention car toutes les calories qui étaient principalement générées par les alimentations convertisseurs (AC/DC ou DC/DC) et dégagées dans l'enceinte commune alimentations/équipements sont grâce à ce dispositif, évacuées naturellement hors habitacle. Il s'ensuit une température de fonctionnement beaucoup plus basse des équipements alimentés et donc un environnement climatique favorable et une durée de vie des équipements grandement améliorée ;
- des batteries de stockage personnalisées soit du type batteries solaires au plomb stationnaire à grande réserve d'électrolyte, soit du type étanche à recombinaison de gaz, soit des batteries type cadmium/nickel. La charge et l'entretien de ces batteries sont obtenus grâce aux convertisseurs DC/DC dont la tension de sortie est réglable de 20 % à 60 %.

Le fonctionnement de l'ensemble est très simple :

Pendant les périodes d'ensoleillement les modules solaires photovoltaïques 10 alimentent d'une part les différents convertisseurs DC/DC et d'autre part chargent la batterie principale (220 volts DC) à travers le régulateur de charge haute tension. Si nécessaire les convertisseurs DC/DC peuvent eux aussi alimenter l'utilisation et recharger les différentes batteries associées. En période de fonctionnement normal ces batteries dites personnalisées à chaque source sont simplement entretenues dans leur état de pleine charge.

En période de non-ensoleillement (la nuit ou période de faible ou non-ensoleillement) la batterie principale fournit les ampères heures nécessaires à l'alimentation des convertisseurs DC/DC. Si la période de non-ensoleillement est supérieure à la durée dite en autonomie sur batterie fixée par le calcul du dimensionnement initial, alors la batterie principale se déconnecte (rôle du régulateur de charge haute tension) et ce sont les batteries dites personnalisées qui prennent la relève en assurant la fourniture des ampères heures à l'utilisation. Si cette deuxième durée de fonctionnement sur batterie est supérieure à la durée fixée par le dimensionnement initial, une sécurité déconnecte ces batteries afin de les protéger contre une décharge profonde.

Lorsque l'ensoleillement revient, la batterie principale est automatiquement reconnectée et se recharge ; en parallèle, les convertisseurs sont eux aussi alimentés ; ils passent automatiquement en position de charge et rechargent les batteries associées tout en alimentant l'utilisation. A ce niveau une variante représentée à la figure 8 pourrait consister à personnaliser certains convertisseurs 58 pour leur affecter un rôle plus spécifique de chargeur (tension de charge plus élevée que sur l'utilisation). C'est une fonction que l'on connaît bien sur les systèmes de redresseurs/chargeurs en 48 volts notamment.

Une fois la tension de fin de charge atteinte sur les différentes batteries le régulateur haute tension, ainsi que les différents convertisseurs, reprennent leurs tensions de fonctionnement/entretien normales.

On va considérer ci-dessous le détail d'un exemple de réalisation d'une station d'énergie photovoltaïque conforme à l'invention et destinée à alimenter une charge permanente de 1000 watts (station de transmission en site isolé et situé au Congo).

Le calcul du système photovoltaïque est le suivant :

### Situation géographique et ensoleillement du site à alimenter:

| | |
|---|---|
| Site | CONGO (Axe nord du Congo : OWENDO) |
| Latitude | 1° Nord |
| Longitude | -10° Ouest |
| Ensoleillement : | moyennes mensuelles des ensoleillements quotidiens reçus par une surface horizontale sur le site (kWh/m²*j) |

| | |
|---|---|
| Janvier | 5.92 |
| Février | 6.21 |
| Mars | 6.25 |
| Avril | 5.14 |
| Mai | 4.83 |
| Juin | 4.59 |
| Juillet | 4.67 |
| Août | 5.65 |
| Septembre | 5.31 |
| Octobre | 5.26 |
| Novembre | 5.53 |
| Décembre | 5.29 |

### Les besoins énergétiques :

| | |
|---|---|
| Besoins quotidiens | 25882.4 Wh/j |
| Tension utilisation | 220 volts |
| Besoins en courant | 123.5 Ah/j |

### Le générateur solaire :

| | |
|---|---|
| Puissance crête totale : | 6600 Wc à 25°C, 1 kW/m², spectre AM 1.5 |
| Modules types : | a) avec des modules 12 V x 48,5 Wc : soit 8 séries parallèles de 17 modules par série (136 modules) |
| | b) avec les modules 55 V x 207 Wc : soit 8 séries parallèles de 4 modules par série (32 modules) |

### Courant disponible (Ah/j) pour l'inclinaison optimum de 5 degrés :

| | |
|---|---|
| Janvier | 135 |
| Février | 141 |
| Mars | 140 |
| Avril | 114 |
| Mai | 106 |
| Juin | 100 |
| Juillet | 102 |
| Août | 124 |
| Septembre | 118 |
| Octobre | 119 |
| Novembre | 126 |
| Décembre | 121 |

### Le stockage dit principal :

| | |
|---|---|
| 1 jour sans soleil : | 130 Ah (capacité nominale pour une décharge en 10 heures) |
| | 220 volts tension nominale (décharge jusqu'à 214.5 volts) |
| | 45 % taux de décharge moyen |
| | 80 % taux de décharge maximum. |
| 2 jours sans soleil : | 260 Ah (capacité nominale pour une décharge en 10 heures) |
| | 220 volts tension nominale (décharge jusqu'à 214.5 volts) |
| | 23 % taux de décharge moyen |
| | 80 % taux de décharge maximum. |
| 7 jours sans soleil : | 744 Ah (capacité nominale pour une décharge en 10 heures) |
| | 220 volts tension nominale (décharge jusqu'à 214.5 volts) |
| | 8 % taux de décharge moyen |
| | 80 % taux de décharge maximum. |

Dans le cas d'une autonomie de un jour, la batterie est très sollicitée (45 % de décharge quotidienne). Il est donc nécessaire de sélectionner une batterie ayant une très bonne tenue au cyclage, ce qui n'est pas le cas pour une autonomie de sept jours avec une décharge quotidienne de 8 %.

### Les convertisseurs DC/DC personnalisés:

Il est nécessaire de connaître les besoins sur chaque source individuellement soit dans l'exemple considéré :

### -Bilan de puissance des sources personnalisées : (besoins propres à l'utilisation)-

| | |
|---|---|
| 2 volts / 75 A | (150 watts) |
| 5 volts /120 A | (600 watts) |
| 12 volts /10 A | (120 watts) |
| 28 volts /4A | (112 watts) |
| Total : | 982 watts (permanents) |

Dans l'exemple considéré quatre sources différentes sont nécessaires. Pour d'autres utilisations rien n'interdit de prévoir d'autres sources.

A ce stade il faut également connaître l'autonomie demandée sur ces sources (fonctionnement sur batteries seule (cas d'une décharge de la batterie principale ou défaillance des convertisseurs DC/DC)).

Si on prend par exemple le cas où l'autonomie sur batterie principale est de deux jours, et si on désire que pour des raisons d'interventions sur le site l'autonomie totale de fonctionnement de la station soit portée à sept jours, il faut donc dimensionner les batteries personnalisées à 7-2 = 5 jours d'autonomie.

Ce qui, rapporté aux différentes sources donne les capacités suivantes :

| | |
|---|---|
| Source 2 V / 75 A : | Capacité pour 5 jours (C/120) de 9 000 Ah, soit en C/10 : 6 430 Ah |
| Source 5 V / 120 A : | Capacité pour 5 jours (C/120) de 14 4000 Ah, soit en C/10 : 10 286 Ah |
| Source 12 V / 10 A : | Capacité pour 5 jours (C/120) de 1 200 Ah, soit en C/10 : 860 Ah |
| Source 28 V /4 A : | Capacité pour 5 jours (C/120) de 480 Ah, soit en C/10 : 345 Ah |

### -Organisation des convertisseurs DC/DC-

L'organisation des convertisseurs DC/DC peut être envisagée selon différentes configurations, en voici deux particulières :

La figure 7 correspond à une première configuration dans laquelle le convertisseur est équipé d'origine d'un système automatique de passage charge/entretien correspondant à un changement de tension appliqué sur les éléments de batteries d'accumulateurs. En sortie de l'ensemble convertisseur et batterie personnalisée, on trouve un circuit de filtrage, régulation destiné à assurer la régulation de la tension sur l'utilisation. En effet, en fonctionnement sur batterie personnalisée, la tension de cette batterie va varier tout au long de son cycle charge/décharge, alors que (par exemple) on doit assurer une fourniture de 5,15 volts constante sur la source (5 volts / 120A) d'où la nécessité de prévoir un circuit de régulation. Cette régulation est bien maîtrisée par l'homme de l'art. On peut citer par exemple la réalisation consistant en plusieurs transistors MOS dont la caractéristique de transductance est considérée afin de faire varier la tension drain-source. Dans ce cas, un amplificateur différentiel peut amplifier la différence entre la tension de référence, obtenue à partir d'une diode zéner et la tension mesurée à la sortie de la batterie/convertisseur. La tension de référence peut être amenée à zéro par un microprocesseur ou par un détecteur de présence de tension inhibant ainsi l'action du régulateur. En cas de décharge sur batteries c'est ce dernier circuit qui régule la tension en décharge, alors que le microprocesseur en limite la durée.

Dans cette première configuration, les convertisseurs DC/DC sont tous mis en parallèle. La capacité de l'ensemble doit prendre en compte le courant permanent propre à l'utilisation, plus le courant de recharge des batteries d'accumulateurs. Le temps de recharge est un élément de calcul pour le dimensionnement des convertisseurs. On adopte dans l'exemple considéré une durée de recharge de dix jours.

Dans le même but d'assurer la haute fiabilité de l'ensemble, un minimum (n + 1) convertisseurs sera prévu.

Partant de ces différentes considérations, et dans une telle configuration, le dimensionnement des convertisseurs sur chaque source est le suivant :

### • Source 2 volts / 75 ampères :

- sur l'utilisation 150 watts sont nécessaires ;
- sur la batterie (6430/(10*24)) = 27*2 = 54 watts sont nécessaires ;
- total ~ 200 watts sont nécessaires ;
- si on choisit un type de convertisseur de 100 watts, on a, en tenant compte la redondance définie précédemment, 2+1=3 convertisseurs de 100 watts sur cette source 2 volts / 75 ampères.

### • Source 5 volts / 120 ampères :

- sur l'utilisation 600 watts sont nécessaires ;
- sur la batterie (10 286/(10*24)) = 42.8*5 = 215 watts sont nécessaires ;
- total ~ 800 watts sont nécessaires ;
- si on choisit un type de convertisseur de 200 watts unitaire, on a, en tenant compte la redondance définie précédemment, 4 + 1 = 5 convertisseurs de 200 watts sur cette source 5 volts/ 120 ampères.

### • Source 12 volts / 10 ampères :

- sur l'utilisation 120 watts sont nécessaires ;
- sur la batterie (860/(10*24)) = 3.6*12 = 43.2 watts sont nécessaires ;
- total ~ 150 watts sont nécessaires ;
- si on choisit un type de convertisseur de 75 watts, on a, en tenant compte la redondance définie précédemment 2 + 1 = 3 convertisseurs de 75 watts sur cette source 12 volts / 10 ampères .

### • Source 28 volts / 4 ampères :

- sur l'utilisation 112 watts sont nécessaires ;
- sur la batterie (345/(10*24)) = 1.44*28 = 41 watts sont nécessaires ;
- total ~ 150 watts sont nécessaires ;
- si on choisit un type de convertisseur de 75 watts, on a, en tenant compte la redondance définie précédemment, 2+1=3 convertisseurs de 75 watts sur cette source 28 volts / 4 ampères.

La puissance unitaire de chaque convertisseur peut être déterminée en fonction d'un encombrement donné ou d'une standardisation souhaitée.

En résumant on trouve pour cette première configuration :
Source 2 V : 3 convertisseurs 220 / 2 V de 100 watts
Source 5 V : 5 convertisseurs 220 / 5 V de 200 watts
Source 12 V : 3 convertisseurs 220 /12 V de 75 watts
Source 2 V : 3 convertisseurs 220 / 28 V de 75 watts

Une seconde configuration consiste à affecter des convertisseurs à la seule charge des batteries personnalisées. Cette solution est représentée sur la figure 8. Sur cette figure 8 on reprend les mêmes références que sur la figure 7. De plus, sont représentés des convertisseurs chargeurs 58.

Dans cette seconde configuration la tension de sortie des convertisseurs peut être réglée indépendamment de la tension de sortie des convertisseurs en direct sur l'utilisation. Dans ce cas la redondance des convertisseurs est calculée sur le seuls besoins de l'utilisation, le circuit de charge des batteries étant déjà considéré comme un circuit de secours. Il s'en suit un gain en équipement. De plus on peut envisager une coupure du convertisseur de charge lorsque la batterie associée est chargée, réalisant ainsi une économie sur la consommation globale de la station.

Dans cette seconde configuration le dimensionnement est le suivant :

### • Source 2 volts / 75 ampères :

- sur l'utilisation 150 watts sont nécessaires ;
- sur la batterie (6430/(10*24)) = 27*2 = 54 watts sont nécessaires ;
- on prend un convertisseur type 50 watts ;
- si on choisit un type de convertisseur de 75 watts, on a 2 + 1 = 3 convertisseurs de 75 watts.

### • Source 5 volts / 120 ampères :

- sur l'utilisation 600 watts sont nécessaires ;
- sur la batterie (10286/(10*24)) =42.8*5 = 215 watts sont nécessaires ;
- on prend un convertisseur de 200 watts ;
- si on prend des convertisseurs de 200 watts, on doit installer 3 + 1 = 4 convertisseurs de 200 watts.

### • Source 12 volts / 10 ampères :

- sur l'utilisation 120 watts sont nécessaires ;
- sur la batterie (860/(10*24)) = 3.6*12 = 43.2 watts sont nécessaires ;
- on prend un convertisseur de 50 watts ;
- si on prend des convertisseurs de 50 watts, on doit installer 3 + 1 = 4 convertisseurs de 50 watts.

### • Source 28 volts / 4 ampères :

- sur l'utilisation 112 watts sont nécessaires ;
- sur la batterie (345/(10*24)) = 1.44*28 = 41 watts sont nécessaires ;
- on prend un convertisseur de 50 watts ;
- si on prend des convertisseurs de 50 watts, on a 2+1=3 convertisseurs de 50 watts.

En comparant les deux configurations on voit que la différence de puissance installée au niveau des convertisseurs est de :
Configuration 1 : (3*100)+(5*200)+(3*75)+(3*75) = 1750 watts
Configuration 2 : (3*75)+50+(4*200)+200+(4*50)+50+(3*50)+50 = 1725 watts
Soit une différence de -25 watts sur la puissance installée et en situation de batterie chargée la différence devient (1750-1375)=375 watts, ce qui devient très intéressant.

### -Le stockage dit "personnalisé"-

Avec des batteries au plomb type stationnaires classiques, on utilise des éléments de 2 volts unitaires. Avec des éléments au nickel-cadmium on utilise des éléments de 1,2 volts unitaire. Un panachage de différents types de batterie est possible, la charge devant être personnalisée à chaque type de batterie.

Le nombre d'éléments par source est fonction :
- de la tension à fournir;
- de la redondance choisie.

Pour revenir à l'exemple considéré plus haut :
- Sur la source 2V : 2 éléments de type stationnaire au plomb de 3215 Ah en parallèle
- Sur la source 5V : 2 x 3 éléments de type stationnaire au plomb de 3600 Ah en parallèle
- Sur la source 12V : 6 éléments de type stationnaire au plomb de 860 Ah (+diode)
- Sur la source 28V : 14 éléments de type stationnaire au plomb de 345 Ah (+ diode)

Dans une telle configuration toutes les batteries sont sécurisées (grâce à une redondance de type C/2 ou grâce aux diodes de passage sur les éléments de faible capacité). Cette configuration correspond à une station de haute fiabilité de type télécommunications. Cette sécurité n'est pas nécessaire dans la majorité des cas.

Ces batteries ne sont pas normalement sollicitées puisque c'est quotidiennement la batterie dite principale qui assume la fourniture des ampères heures noctumes. Dans l'exemple considéré une décharge n'interviendrait qu'après deux jours sans ensoleillement, ce qui, selon les sites et rapporté à l'année, ne représente qu'une faible sollicitation au cyclage. La bonne tenue au cyclage n'est donc pas un critère de choix pour ces batteries.

Pour les très faibles intensités telles que celle de la source 28 volts/4 ampères de l'exemple considéré, des blocs de batteries de type 6 ou 12 volts unitaires peuvent être utilisés (gain de place supplémentaire). De plus l'autonomie de ces sources n'est pas nécessairement la même que sur les autre sources. Par exemple si ces tensions servent par exemple au renvoi d'alarme à distance, une fois le système terminal informé de l'alarme il n'est plus nécessaire de maintenir son alimentation en local. C'est ainsi qu'une économie et un gain de place peuvent être envisagés sur le stockage personnalisé de cette source (non pris en compte dans l'exemple). Ceci pour bien expliquer les avantages que procure ce type de station d'énergie.

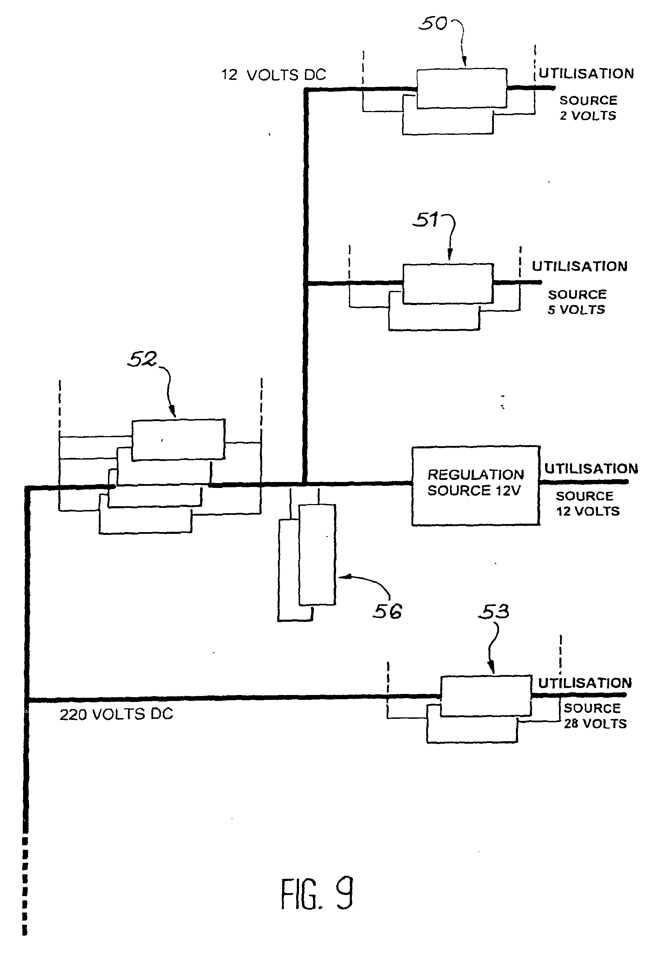

Une autre variante de l'invention consiste à stocker l'énergie uniquement sur une ou deux batteries personnalisées et d'assurer la fourniture des sources par des convertisseurs adaptés aux sources à stockage comme représenté sur la figure 9, les références utilisées étant celles utilisées sur la figure 8.

Ainsi la station relais de télécommunication, considérée à titre d'exemple, est située en site isolé (il faut comprendre isolé de tout réseau de distribution électrique commercial) et sous l'équateur. La figure 6 donne une idée d'implantation des différentes composantes de la station selon la configuration de la figure 4 qui est la plus complète (mais aussi la plus pénalisante en équipements). On distingue le champ solaire 45 distant du shelter 46 constitué
- la salle des équipements de télécommunication 47 ;
- la salle de l'énergie 48.

L'invention est ici caractérisé en ce que les équipements de télécommunications sont totalement séparés des équipements d'énergie. Le dégagement calorifique propre aux équipements de télécommunications est minime, aucune ventilation n'est nécessaire, une enceinte entièrement close et thermiquement isolée est prévue. Cette disposition évite les problèmes bien connus sous climat équatorial : humidité, chaleur, pénétration de poussières et d'insectes, rongeurs...

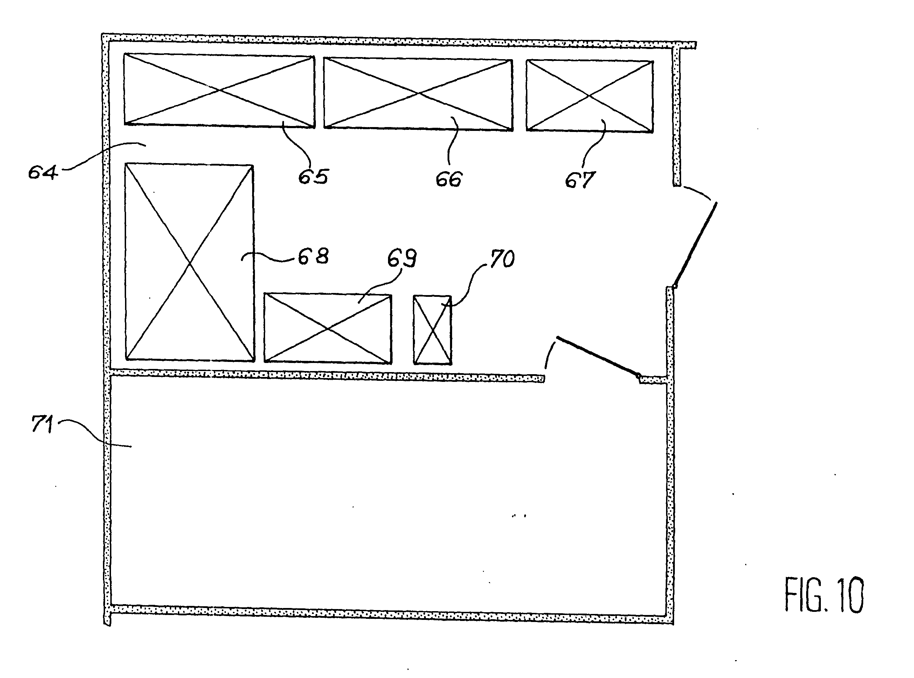

Le plan de la salle d'énergie 64, représenté sur la figure 10, est donné en tenant compte des dimensions réelles des batteries et des convertisseurs, soit :
- les batteries 220 volts (65) et (66) ;
- les batteries 2 volts (67) ;
- les batteries 5 volts (68) ;
- les batteries 12 et 28 volts (69) ;
- la baie des convertisseurs (70).

En 71 est représentée la salle des équipements de télécommunications.

Il faut noter la taille très modeste des convertisseurs DC/DC. A titre d'exemple un convertisseur de 220 volts/5 volts de 200 watts a les dimensions suivantes : L = 8,3 cm ; H = 1,27 cm ; P = 8,6 cm.

### BIBLIOGRAPHIE

[1] "Les stations d'énergie photovoltaïques" (Edition du CIEN - mai 1992) de C. GUYONNEAU.
[2] Demande de brevet Européen "Régulateur de charge de batterie d'accumulateurs pour générateur photovoltaïque" de PHOTOWATT INTERNATIONAL EP-0 342 578 déposée le 16 mai 1989.
[3] Demande de brevet allemand de TELEFUNKEN SYSTEMTECHNIK DE-4026526 A1 déposée le 22 août 1990.
[4] GB-A-2 033 680

## Revendications

1. Station d'énergie photovoltaïque haute tension à double stockage comprenant :
- plusieurs modules solaires photovoltaïques (10) qui sont des modules de tension unitaire en association série/parallèle,
- un dispositif de stockage principal en haute tension (32) formé d'une batterie d'accumulateurs;
- un régulateur (31) de charge du dispositif de stockage principal (32) ;
**caractérisé en ce qu'**elle comprend en outre :
- un dispositif de stockage dit personnalisé (33) comprenant au moins une batterie de stockage personnalisé permettant d'affecter la puissance nécessaire à une ou plusieurs tensions d'utilisation ;
- un dispositif de conversion (34) entre le dispositif de stockage principal et le dispositif de stockage dit personnalisé ;
- une liaison en haute tension entre le dispositif de stockage principal (32) et le dispositif de conversion (34) ;
- un dispositif de régulation (35) de chaque tension d'utilisation.

2. Station selon la revendication 1, **caractérisée en ce que** les modules solaires photovoltaïques sont des modules de tension unitaire minimum de 55 volts.

3. Station selon la revendication 1, **caractérisé en ce que** le dispositif de stockage principal (32) est constitué d'une batterie d'accumulateurs en série dont la tension totale est au moins égale à 220 volts, et dont la capacité est en fonction de la charge et de l'autonomie souhaitée en fonctionnement sans ensoleillement.

4. Station selon la revendication 3, **caractérisée en ce que** les batteries du dispositif de stockage principal (32) et du dispositif de stockage (33) dit personnalisé sont soit de type stationnaire au plomb à grande réserve d'électrolyte, soit étanche, soit de type cadmium-nickel.

5. Station selon la revendication 3, **caractérisée en ce que** des diodes de passage (41) sont disposées sur chaque élément (40) de batterie d'accumulateurs de façon à assurer une continuité de fonctionnement en cas de rupture d'un élément.

6. Station selon la revendication 1, **caractérisée en ce que** le dispositif de conversion (34) comprend des convertisseurs continu/continu, disposés en parallèle ou en série, partent du 220 volts continu pour fournir les tensions d'utilisation.

7. Station selon la revendication 1, **caractérisée en ce que** le dispositif de stockage dit personnalisé (33) comprend des batteries qui sont soit du type batteries solaires au plomb stationnaire à grande réserve d'électrolyte, soit du type étanche à recombinaison de gaz, soit des batteries type cadmium/nickel, la charge et l'entretien de ces batteries étant obtenus grâce à des convertisseurs continu/continu dont la tension de sortie est réglable de 20 % à 60%.

8. Station selon la revendication 1, **caractérisé en ce que** le dispositif de conversion comprend un convertisseur équipé d'un système automatique de passage charge/entretien correspondant à un changement de tension appliqué sur les éléments de batteries d'accumulateurs.

9. Station selon la revendication 8, **caractérisée en ce qu'**elle comprend un circuit de filtrage/régulation, destiné à assurer la régulation de la tension d'utilisation, disposé en sortie du dispositif de conversion (34) et du dispositif de stockage dit personnalisé (33).

10. Station selon la revendication 8, **caractérisée en ce qu'**elle comprend un amplificateur différentiel qui amplifie la différence entre la tension de référence, obtenue à partir d'une diode zéner et la tension mesurée à la sortie de l'ensemble dispositif de conversion (34)/dispositif de stockage dit personnalisé (33), la tension de référence étant amenée à zéro par un microprocesseur ou par un détecteur de présence de tension inhibant ainsi l'action du régulateur.

11. Station selon la revendication 10, **caractérisée en ce que** le dispositif de conversion comprend des convertisseurs DC/DC en groupements série/parallèle, la capacité de l'ensemble prenant en compte le courant permanent propre à l'utilisation, ainsi que le courant de recharge des batteries d'accumulateurs.

12. Station selon la revendication 1, **caractérisée en ce que** le dispositif de conversion comprend des convertisseurs affectés à la seule charge de batteries du dispositif de stockage dit personnalisé (33).

13. Station selon la revendication 12, **caractérisé en ce que** la tension de sortie des convertisseurs est réglée indépendamment de la tension de sortie des convertisseurs en direct sur l'utilisation, la redondance des convertisseurs étant calculée sur le seuls besoins de l'utilisation, le circuit de charge des batteries étant considéré comme un circuit de secours.

14. Station selon la revendication 1, **caractérisé en ce que** le dispositif de conversion comprend des convertisseurs (34), le dispositif de régulation comporte des régulateurs personnalisés (35), lesdits convertisseurs (34), batteries de stockage personnalisé (33) et régulateurs personnalisés (35) alimentant des équipement électroniques ou informatiques.

15. Station selon la revendication 1, **caractérisée en ce qu'**elle comprend des équipements de télécommunications totalement séparés des équipements d'énergie, une enceinte entièrement close et thermiquement isolée étant prévue.

16. Station selon la revendication 1, **caractérisé en ce qu'**elle comprend deux types de batteries de stockage personnalisé d'énergie.

## Claims

1. Dual-storage high-voltage photovoltaic energy station comprising:
- several photovoltaic solar modules (10) which are modules of unitary voltage in series/parallel association,
- a high-voltage main storage device (32) formed of a battery of accumulators;
- a regulator (31) for charging the main storage device (32);
**characterized in that** it furthermore comprises:
- a so-called custom storage device (33) comprising at least one custom storage battery making it possible to assign the power required to one or more usage voltages;
- a conversion device (34) between the main storage device and the so-called custom storage device;
- a high-voltage link between the main storage device (32) and the conversion device (34);
- a device (35) for regulating each usage voltage.

2. Station according to Claim 1, **characterized in that** the photovoltaic solar modules are modules of minimum unitary voltage of 55 volts.

3. Station according to Claim 1, **characterized in that** the main storage device (32) consists of a battery of accumulators in series whose total voltage is at least equal to 220 volts, and whose capacity is dependent on the charge and on the desired autonomous running time when operating without sunshine.

4. Station according to Claim 3, **characterized in that** the batteries of the main storage device (32) and of the so-called custom storage device (33) are either of stationary lead type with a large reserve of electrolyte, or sealed, or of cadmium-nickel type.

5. Station according to Claim 3, **characterized in that** toggling diodes (41) are disposed on each accumulator battery element (40) in such a way as to ensure continuity of operation in case of breakage of an element.

6. Station according to Claim 1, **characterized in that** the conversion device (34) comprises DC/DC converters, disposed in parallel or in series, start from the 220 volts DC to provide the usage voltages.

7. Station according to Claim 1, **characterized in that** the so-called custom storage device (33) comprises batteries which are either of the stationary lead solar battery type with a large reserve of electrolyte, or of the gas recombination sealed type, or batteries of cadmium/nickel type, the charging and the sustaining of these batteries being obtained by virtue of DC/DC converters whose output voltage is adjustable from 20% to 60%.

8. Station according to Claim 1, **characterized in that** the conversion device comprises a converter equipped with an automatic charge/sustain toggling system corresponding to a voltage change applied to the accumulator battery elements.

9. Station according to Claim 8, **characterized in that** it comprises a filtering/regulating circuit, intended to ensure the regulation of the usage voltage, disposed at the output of the conversion device (34) and of the so-called custom storage device (33).

10. Station according to Claim 8, **characterized in that** it comprises a differential amplifier which amplifies the difference between the reference voltage, obtained on the basis of a Zener diode and the voltage measured at the output of the conversion device (34)/so-called custom storage device (33) assembly, the reference voltage being brought to zero by a microprocessor or by a voltage presence detector thus disabling the action of the regulator.

11. Station according to Claim 10, **characterized in that** the conversion device comprises DC/DC converters in series/parallel groupings, the capacity of the assembly taking into account the permanent current specific to the usage, as well as the current for recharging the accumulator batteries.

12. Station according to Claim 1, **characterized in that** the conversion device comprises converters assigned solely to the charging of batteries of the so-called custom storage device (33).

13. Station according to Claim 12, **characterized in that** the output voltage of the converters is adjusted independently of the output voltage of the converters directly on usage, the redundancy of the converters being calculated solely on the requirements of the usage, the circuit for charging the batteries being considered to be a backup circuit.

14. Station according to Claim 1, **characterized in that** the conversion device comprises converters (34), the regulating device comprises custom regulators (35), the said converters (34), custom storage batteries (33) and custom regulators (35) supplying electronic or computing equipment.

15. Station according to Claim 1, **characterized in that** it comprises telecommunications equipment totally separate from the energy equipment, an entirely sealed and thermally insulated enclosure being provided.

16. Station according to Claim 1, **characterized in that** it comprises two types of custom energy storage batteries.

## Patentansprüche

1. Photovoltaische Energiestation hoher Spannung mit doppelter Speicherung, die Folgendes aufweist:
- mehrere photovoltaische Solarmodule (10), die Module mit Einheitsspannung in einer Serien-/Parallelschaltung sind,
- eine Hauptspeichervorrichtung für Hochspannung (32), die von einer Akkumulatoren-Batterie gebildet wird;
- einen Ladungsregler (31) für die Hauptspeichervorrichtung (32);
**dadurch gekennzeichnet, dass** sie weiter Folgendes aufweist:
- eine anwendungsspezifische Speichervorrichtung (33), die mindestens eine anwendungsspezifische Speicherbatterie aufweist, die es ermöglicht, die für eine oder mehrere Nutzspannungen notwendige Leistung zuzuteilen;
- eine Umwandlungsvorrichtung (34) zwischen der Hauptspeichervorrichtung und der anwendungsspezifischen Speichervorrichtung;
- eine Hochspannungsverbindung zwischen der Hauptspeichervorrichtung (32) und der Umwandlungsvorrichtung (34);
- eine Regelvorrichtung (35) für jede Nutzspannung.

2. Station nach Anspruch 1, **dadurch gekennzeichnet, dass** die photovoltaischen Solarmodule Module mit einer Mindesteinheitsspannung von 55 Volt sind.

3. Station nach Anspruch 1, **dadurch gekennzeichnet, dass** die Hauptspeichervorrichtung (32) aus einer Batterie von in Reihe geschalteten Akkumulatoren besteht, deren Gesamtspannung mindestens 220 Volt beträgt und deren Kapazität von der Ladung und der gewünschten Autonomie im Betrieb ohne Sonneneinstrahlung abhängt.

4. Station nach Anspruch 3, **dadurch gekennzeichnet, dass** die Batterien der Hauptspeichervorrichtung (32) und der anwendungsspezifischen Speichervorrichtung (33) vom stationären Blei-Typ mit großer Elektrolytreserve oder vom dichten Typ oder vom Cadmium-Nickel-Typ sind.

5. Station nach Anspruch 3, **dadurch gekennzeichnet, dass** Durchgangsdioden (41) auf jedem Element (40) der Batterie von Akkumulatoren angeordnet sind, um eine Betriebskontinuität im Fall des Bruchs eines Elements zu gewährleisten.

6. Station nach Anspruch 1, **dadurch gekennzeichnet, dass** die Umwandlungsvorrichtung (34) Gleichstrom/Gleichstrom-Wandler enthält, die parallel oder in Reihe geschaltet sind, ausgehend vom 220-Volt-Gleichstrom, um die Nutzspannungen zu liefern.

7. Station nach Anspruch 1, **dadurch gekennzeichnet, dass** die anwendungsspezifische Speichervorrichtung (33) Batterien aufweist, die entweder vom Typ stationäre Blei-Solarbatterien mit großer Elektrolytreserve oder vom dichten Typ mit Rekombination von Gas oder Batterien vom Cadmium/Nickel-Typ sind, wobei das Aufladen und die Aufrechterhaltung der Spannung dieser Batterien mit Hilfe der Gleichstrom/Gleichstrom-Wandler erhalten werden, deren Ausgangsspannung von 20 % bis 60 % einstellbar ist.

8. Station nach Anspruch 7, **dadurch gekennzeichnet, dass** die Umwandlungsvorrichtung einen mit einem automatischen System des Übergangs zwischen Ladung und Aufrechterhaltung versehenen Wandler aufweist, was einem Wechsel der an die Elemente der Akkumulatoren-Batterien angelegten Spannung entspricht.

9. Station nach Anspruch 8, **dadurch gekennzeichnet, dass** sie eine Filterungs-/Regelungsschaltung aufweist, die dazu bestimmt ist, die Regelung der Nutzspannung zu gewährleisten und die am Ausgang der Umwandlungsvorrichtung (34) und der anwendungsspezifischen Speichervorrichtung (33) angeordnet ist.

10. Station nach Anspruch 8, **dadurch gekennzeichnet, dass** sie einen Differentialverstärker aufweist, der die Differenz zwischen der in einer ZenerDiode erhaltenen Bezugsspannung und der am Ausgang der Einheit aus Umwandlungsvorrichtung (34) und anwendungsspezifischer Speichervorrichtung (33) gemessenen Spannung verstärkt, wobei die Bezugsspannung von einem Mikroprozessor oder von einem Detektor für das Vorhandensein von Spannung auf Null gebracht wird, wodurch die Einwirkung des Reglers verhindert wird.

11. Station nach Anspruch 10, **dadurch gekennzeichnet, dass** die Umwandlungsvorrichtung DC/DC-Wandler in Serien-/Parallelschaltung aufweist, wobei die Kapazität der Einheit den der Nutzung eigenen Permanentstrom sowie den Aufladestrom für die Akkumulatoren-Batterien berücksichtigt.

12. Station nach Anspruch 1, **dadurch gekennzeichnet, dass** die Umwandlungsvorrichtung Wandler aufweist, die nur zum Laden der Batterien der anwendungsspezifischen Speichervorrichtung (33) eingesetzt werden.

13. Station nach Anspruch 12, **dadurch gekennzeichnet, dass** die Ausgangsspannung der Wandler unabhängig von der Ausgangsspannung der Wandler direkt an der Nutzung geregelt wird, wobei die Redundanz der Wandler nur für den Bedarf der Nutzung berechnet wird, wobei die Schaltung zum Laden der Batterien als eine Hilfsschaltung angesehen wird.

14. Station nach Anspruch 1, **dadurch gekennzeichnet, dass** die Umwandlungsvorrichtung Wandler (34) aufweist, und dass die Regelungsvorrichtung anwendungsspezifische Regler (35) aufweist, wobei die Wandler (34), die anwendungsspezifischen Speicherbatterien (33) und die anwendungsspezifischen Regler (35) Elektronik- oder Informatikeinrichtungen versorgen.

15. Station nach Anspruch 1, **dadurch gekennzeichnet, dass** sie Telekommunikationsgeräte aufweist, die vollständig von den Energieeinrichtungen getrennt sind, wobei ein vollständig geschlossener und wärmeisolierter Raum vorgesehen ist.

16. Station nach Anspruch 1, **dadurch gekennzeichnet, dass** sie zwei Typen von anwendungsspezifischen Energiespeicherbatterien aufweist.
